# EUROPEAN PATENT APPLICATION

(11) **EP 4 711 168 A1**
(43) Date of publication of application: **18.03.2026**
(21) Application number: 24199828.5
(22) Date of filing: 11.09.2024
(51) Int. Cl.: B60K 6/10, B60W 10/06, B60W 10/24, B60W 20/10, B60W 20/40, B60W 30/188

(54) **A METHOD FOR CONTROLLING A POWERTRAIN OF A VEHICLE**

(71) Applicant: VOLVO TRUCK CORPORATION, 405 08 Göteborg (SE)
(72) Inventor: CHAVRIER, Philemon, 69008 LYON (FR); LAPERRIERE, Renaud, 69006 LYON (FR); POUSSIN, Olivier, 69008 LYON (FR)
(74) Representative: Lavoix

(57) **Abstract**

A method for controlling a powertrain (7) of a vehicle (1), the powertrain comprising a device (11) for converting energy for driving wheels (4), an engine (15), configured for providing energy to the device, a kinetic energy recovery system (17) switching between a suppling configuration in which the kinetic energy recovery system provides energy and a charging configuration in which the kinetic energy recovery system is charged. The powertrain switches between a regenerative configuration in which the kinetic energy recovery system is in the charging configuration and the device is powered by the engine, and a powered configuration in which the kinetic energy recovery system is in the supplying configuration. The method comprises at least one regeneration-power cycle, comprising the steps of controlling the powertrain in the regenerative configuration, switching the powertrain from the regenerative configuration to the powered configuration; and controlling the powertrain in the powered configuration.

## Description

### TECHNICAL FIELD

The disclosure relates generally to powertrain control. In particular aspects, the disclosure relates to a method for controlling a powertrain of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The consumption of a powertrain is in majority generated by the engine. Limiting the use of the engine in the powertrain allows reducing the consumption of the powertrain. To do so, it is known to use the engine by intermittence. However, using such a method to reduce the consumption is not satisfactory, as the speed of the vehicle is not constant and the comfort of the driver is disrupted.

### SUMMARY

According to a first aspect of the disclosure, a method for controlling a powertrain of a vehicle, the powertrain comprising:
- a device for converting energy for driving wheels of the vehicle,
- an engine, configured for providing energy to the device,
- a kinetic energy recovery system, configured for switching between a suppling configuration in which the kinetic energy recovery system provides energy to the device and a charging configuration in which the kinetic energy recovery system is charged by the engine to storage kinetic energy,

the powertrain being configured to switch between a regenerative configuration in which the kinetic energy recovery system is in the charging configuration and the device is powered by the engine, and a powered configuration in which the kinetic energy recovery system is in the supplying configuration,
wherein the method comprises at least one regeneration-power cycle, comprising the following successive steps:
   a) controlling the powertrain in the regenerative configuration,
   b) switching the powertrain from the regenerative configuration to the powered configuration; and
   c) controlling the powertrain in the powered configuration.

The first aspect of the disclosure may seek to reduce the consumption of the powertrain. A technical benefit may include limiting the use of the engine by providing energy to the device to rotate the wheels with the kinetic energy recovery system. The consumption of the engine is reduced without disturbing the comfort of the driver.

Optionally in some examples, including in at least one preferred example, the device maintains a constant rotation speed of the wheels constant during the at least one regeneration-power cycle. A technical benefit may include improving the comfort of the driver, by conserving a constant speed of the vehicle during a regeneration-power cycle. In other terms, even when the use of the engine is reduced the speed of the vehicle is constant.

Optionally in some examples, including in at least one preferred example, the step b) is carried out if one regenerative-powered switching criteria is complied with, the regenerative-powered criteria comprising charging the kinetic energy recovery system above a charging capacity threshold. The charging capacity threshold is at least more than 80% of a maximal capacity of the kinetic energy recovery system, preferably at least more than 90% of the maximal capacity. A technical benefit may include ensuring that the kinetic energy recovery system stores enough energy to provide the device instead of the engine, by waiting a charging threshold before switching the powertrain.

Optionally in some examples, including in at least one preferred example, the at least one regeneration-power cycle further comprises, after step c), a step d) of switching the powertrain from the powered configuration to the regenerative configuration, the step d) is carried out if one powered-regenerative switching criteria is complied with, the powered-regenerative criteria comprising discharging the kinetic energy recovery system under a discharging capacity threshold. The discharging capacity threshold is less than 20% of a maximal capacity of the kinetic energy recovery system, preferably at least less than the 10% of the maximal capacity. A technical benefit may include limiting the use of the engine by maximizing the use of the energy provided by the kinetic energy storage system to provide the device instead of the engine, by waiting a discharging threshold before switching the powertrain.

Optionally in some examples, including in at least one preferred example, in the powered configuration of the powertrain, the engine is switched off. A technical benefit may include reducing the consumption of the powertrain by switching off the engine when the kinetic energy recovery system provides energy to the device to rotate the wheels.

Optionally in some examples, including in at least one preferred example, during the regenerative configuration of the powertrain, the engine is used above a generation power threshold, the generation power threshold being a least more than 80% of a maximal generation power capacity of the engine, preferably at least more than the 90% of the maximal generation power capacity. A technical benefit may include reducing the time of use of the engine by using the engine above a generation power threshold.

Optionally in some examples, including in at least one preferred example, the regeneration-power cycle is implemented when a speed of the vehicle is above a speed threshold and/or when the speed of the vehicle is constant. A technical benefit may include optimizing the consumption of the vehicle by implementing the method when the conditions are favorable.

Optionally in some examples, including in at least one preferred example, the method comprises several successive regeneration-power cycles. A technical benefit may include improving the consumption of the powertrain by successive cycles, which optimize the consumption of the powertrain without disturbing the comfort of the driver.

According to a second aspect of the disclosure, a powertrain of a vehicle comprising:
- a device for converting energy for driving wheels of the vehicle,
- an engine, configured for providing energy to the device,
- a kinetic energy recovery system, configured for switching between a suppling configuration in which the kinetic energy recovery system provides energy to the device and a charging configuration in which the kinetic energy recovery system is charged by the engine to storage kinetic energy,
- a controller configured for commanding the device , the engine and the kinetic energy recovery system,

the powertrain being configured to switch between a regenerative configuration in which the kinetic energy recovery system is in the charging configuration and the device is powered by the engine, and a powered configuration in which the kinetic energy recovery system is in the supplying configuration,
wherein the controller being configured for controlling at least one regeneration-power cycle, the least one regeneration-power cycle comprising the following successive steps:
   a) controlling the powertrain in the regenerative configuration,
   b) switching the powertrain from the regenerative configuration to the powered configuration; and
   c) controlling the powertrain in the powered configuration.

The second aspect of the disclosure may seek to reduce the consumption of the powertrain. A technical benefit may include limiting the use of the engine by providing energy to the wheels with the kinetic energy recovery system.

According to a third aspect of the disclosure, a vehicle comprising a powertrain as defined above. The third aspect of the disclosure may seek to reduce the consumption of the powertrain. A technical benefit may include limiting the use of the engine by providing energy to the wheels with the kinetic energy recovery system.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein controller, computer readable medium, and computer program products associated with the above discussed technical benefits.

### BRIEF DESCRIPTION OF THE DRAWINGS

Examples are described in more details below with reference to the appended drawings.
**FIG. 1** is a schematic view of a vehicle according to an embodiment of the invention.
**FIG. 2** is a flowchart of an example of a method according to an embodiment of the invention.
**FIG. 3** is an example of a curve A of a rotation speed of wheels of the vehicle as a function of time, a curve B of energy delivered by an engine as a function of time and a curve C of the energy capacity of a kinetic energy recovery system as a function of time during two successive regeneration-power cycles of the method.

### DETAILED DESCRIPTION

The detailed description set forth below provides information and examples of the disclosed technology with sufficient detail to enable those skilled in the art to practice the disclosure.

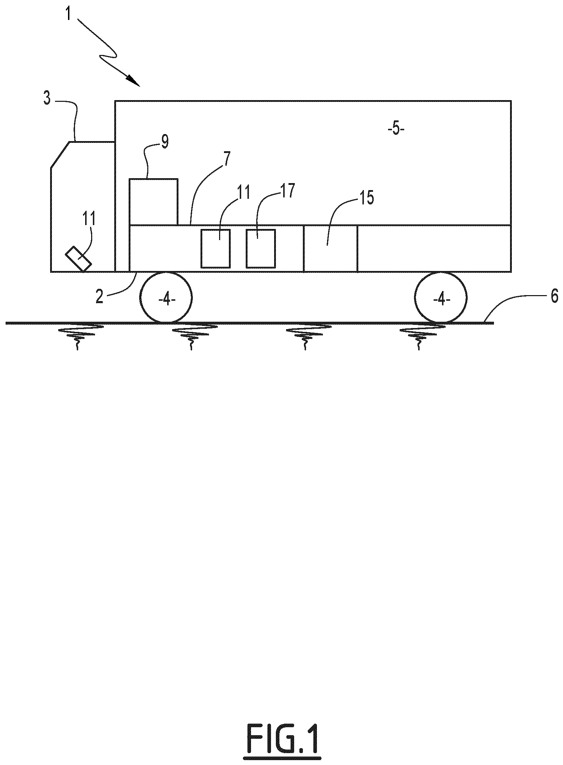

Figure 1 depicts a vehicle 1, comprising a frame 2, a driving cabin 3, wheels 4, a load compartment 5, a powertrain 7 and a controller 9, according to an embodiment of the invention. The vehicle 1 is preferably a hybrid vehicle.

The driving cabin 3 is supported by the frame 2 and positioned at the front of the vehicle 1. The vehicle 1 is drivable by a driver. The driver inside the driving cabin 3 controls the vehicle 1.

The wheels 4 are mounted on the frame 2 and configured to rotate to enable the movement of the vehicle 1 on a road 6.

The powertrain 7 comprises a device 11 for converting energy for rotating the wheels 4 of the vehicle 1.

The powertrain 7 comprises an engine 15 and an energy kinetic recovery system 17.

The powertrain 7 provides a propulsion force to the vehicle 1 to propel the vehicle 1. The propulsion force is the result of a mechanical transformation by the device 11 of energies provided by the engine 15 and/or the kinetic energy recovery system 17.

The device 11 comprises for example an electric machine configured for converting energy from either the engine 15 or the energy kinetic recovery system 17 into mechanical energy, the electric machine being mechanically connected to a differential that is mechanically coupled to a drive shaft connecting the wheels 4.

The engine 15 is an internal combustion engine. The internal combustion engine is for example spark-ignited or compression-ignited. The engine 15 outputs energy based on the combustion of fuel.

The engine 15 comprises an output shaft, not represented on the figures. The output shaft rotates by rotation, when the engine 15 generates power. The rotation of the output shaft provides energy to the device 11 to rotate the wheels.

The energy kinetic recovery system 17 is configured for switching between a charging configuration and a suppling configuration.

In the charging configuration, the kinetic energy recovery system 17 is charged by the engine 15 to store kinetic energy. The kinetic energy recovery system 17 can store energy to a maximal capacity.

In the suppling configuration, the kinetic energy recovery system 17 provides energy to the device 11 to rotate the wheels 4. More precisely, the energy provided by the kinetic energy recovery system 17 is the energy previously stored in the charging configuration of the kinetic energy recovery system 17.

The powertrain 7 is configured to switch between a regenerative configuration and a powered configuration. In the regenerative configuration, the kinetic energy recovery system 17 is in the charging configuration. In the powered configuration, the kinetic energy recovery system 17 is in the supplying configuration.

Thus, the energy provided to the device 11 for driving the wheels 4 depends on the configuration of the powertrain 7.

The configuration of the powertrain 7 is controlled by the controller 9 commanding the engine 15, the device 11 and the kinetic energy recovery system 17.

Advantageously, the controller 9 is adapted to carry out a method for controlling the powertrain 7. This method may be a computer-implemented method.

More generally, the controller 9 is preferably a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The controller 9 preferably comprises a processing unit. The terms "processing unit" as disclosed herein should be broadly construed to include any kind of electronic device with data processing circuitry, which includes for example a computer processing device operatively connected to a computer readable medium: e.g. digital signal processor (DSP), a microcontroller, a field programmable gate array (FPGA), and an application specific integrated circuit (ASIC), capable of executing various data processing operations.

It can encompass a single processor or multiple processors, which may be located in the same geographical zone or may, at least partially, be located in different zones and may be able to communicate together.

The computer readable medium is a medium that can be read by the processing unit. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the processing unit and adapted to cause execution of the method to control the powertrain 7 when the computer program is run by the processing unit.

The controller 9 executes the method to control the powertrain 7 when the vehicle 1 is in a steady state. In other words, the controller 9 executes the method to control the powertrain 7 when a speed of the vehicle 1 is above a speed threshold and/or when the speed of the vehicle 1 is constant.

The controller 9 considers that the speed of the vehicle 1 is constant when the speed of the vehicle 1 changes less than 3% in a time laps of 30 seconds. Therefore, the controller 9 can implement the method when the speed of the vehicle 1 is constant to reduce the consumption.

In one embodiment, the speed threshold is set by the driver. In this embodiment, the vehicle 1 for example comprises a speed regulation mode in which the speed of the vehicle 1 is kept constant at a selected speed set by the driver through a human-machine interface. The speed threshold then corresponds to the selected speed, set by the driver.

In another embodiment, the speed threshold is independent from the driver. In this embodiment, the speed threshold for example corresponds to a maximum legal speed authorized on the road on which the vehicle is driving.

Once the speed of the vehicle 1 reaches the speed threshold, the controller 9 executes the method. Once the method is implemented, the speed of the vehicle 1 is stabilized and remains constant.

By "constant", it is meant that the speed changes less than 3% in a time laps of 30 seconds.

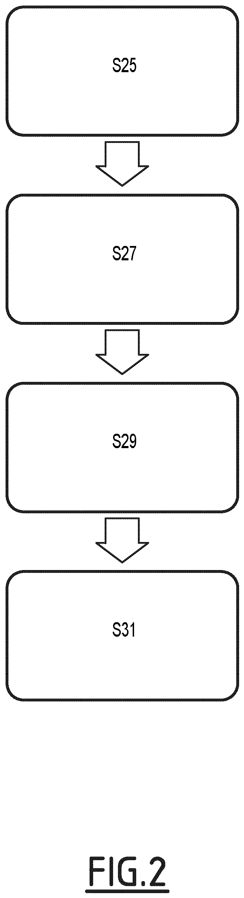

An example of operating of the controller 9 is now described in reference to figure 2, which is a flowchart of an example of a method for controlling the powertrain 7.

The method for controlling the powertrain 7 aims at reducing the consumption of the powertrain 7, by limiting the use of the engine 15 and the fuel consumption.

The method for controlling the engine 15 comprises at least one regeneration-power cycle. According to the example of figure 2, the regenerative-power cycle comprises the following successive steps of controlling the powertrain 7 in the regenerative configuration S25, switching the powertrain 7 from the regenerative configuration to the powered configuration S27, and controlling the powertrain 7 in the powered configuration S29.

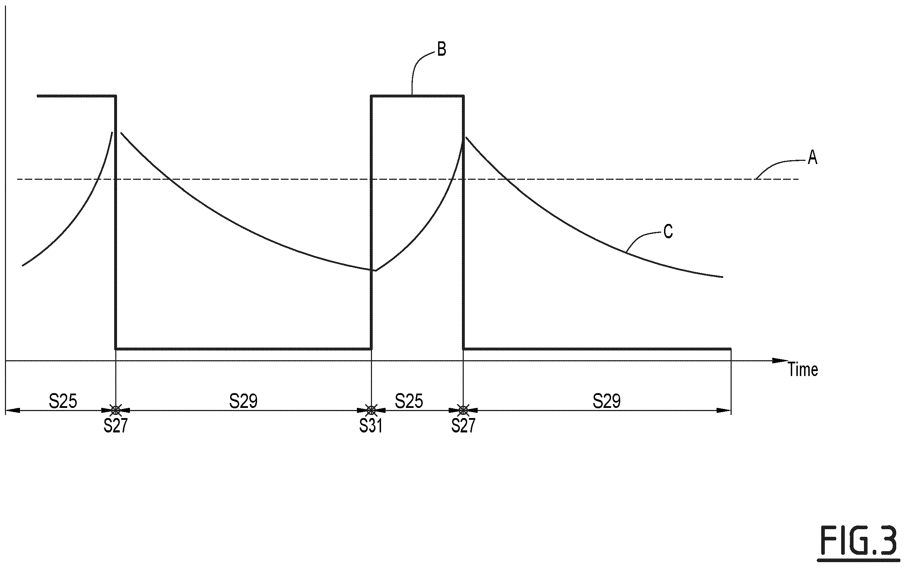

During the step S25 of controlling the powertrain 7 in the regenerative configuration, the engine 15 provides energy both to the kinetic energy recovery system 17 in the charging configuration and to the device 11 to rotate the wheels 4. In other words, during the step of controlling S25, as shown on figure 3, the engine 15 provides energy to the device 11 to keep constant a rotation speed of the wheels 4 and, in the same time, the engine 15 provides energy to the kinetic energy recovery system 17 to charge the kinetic energy recovery system 17 to store kinetic energy in the kinetic energy recovery system 17.

Thus, during the step of controlling S25, as shown on figure 3, the energy provided by the engine 15 enables to charge the kinetic energy recovery system 17.

Advantageously, during the step S25, the engine 15 is used above a generation power threshold. The generation power threshold is a least more than 80% of a maximal power capacity of the engine 15 and preferably at least more than the 90% of the maximal power capacity of the engine 15.

Thus, the using of the engine 15 above the generation power threshold limits the time of use of the engine 15 to store energy in the kinetic energy recovery system 17 and to provide energy to the device to rotate the wheels 4. The consumption of the powertrain 7 is optimized by the limitation in time of the use of the engine 15.

The step of switching the powertrain 7 from the regenerative configuration to the powered configuration S27 is implemented after the step of controlling S25. During the step of switching the powertrain 7 from the regenerative configuration to the powered configuration S27, the controller 9 gives order to the engine 15, the device 11 and the kinetic energy recovery system 17 to switch the powertrain 7 from the regenerative configuration to the powered configuration.

Advantageously, the step of switching S27 is implemented if one regenerative-powered switching criteria is complied with. The regenerative-powered criteria comprises charging the kinetic energy recovery system 17 above a charging capacity threshold. In other terms, the step of controlling S25 lasts until the kinetic energy recovery system 17 is enough charged.

Advantageously, the charging capacity threshold is at least more than 80% of the maximal capacity of the kinetic energy recovery system 17 and preferably at least more than 90% of the maximal capacity.

The step of controlling the powertrain 7 in the powered configuration S29 is implemented after the step of switching S27. In fact, the step of switching S27 is instantaneous and the step of controlling S29 follows the step of controlling S25 to the nearest switching time of the powertrain 7.

During the step of controlling S29, the kinetic energy recovery system 17 is in the supplying configuration and provides the energy stored during the step of controlling S25 to the device 11 to rotate the wheels 4. During the step of controlling S29, as shown on the figure 3, the majority of the energy provided to the device 11 comes from the kinetic energy recovery system 17.

Advantageously, during the step of switching S29, the engine 15 is switched off by the controller 9. For instance, the engine 15 is configured to evolve between an engaged configuration in which the engine 15 is coupled with the device 11 to provide energy to rotate the wheels 4 and a disengaged configuration in which the engine 15 is decoupled from the device 11. Thus, when the powertrain 7 is in the powered configuration the engine 15 is in the disengaged configuration and switched off so that the consumption of the vehicle 1 is reduced and the engine 15 switched off does not brake the rest of the powertrain 7.

Advantageously, the regeneration-power cycle comprises, after the step of controlling S29, a step of switching the powertrain from the powered configuration to the regenerative configuration S31. During the step of switching S31, the controller 9 gives order to the engine 15, the device 11 and the kinetic energy recovery system 17 to switch the powertrain 7 from the powered configuration to the regenerative configuration. In fact, as the step of switching S27, the step of switching S31 is instantaneous to the nearest switching time of the powertrain 7.

The step of switching S31 is carried out if one powered-regenerative switching criteria is complied with. The powered-regenerative criteria comprising discharging the kinetic energy recovery system 17 under a discharging capacity threshold. In other terms, the kinetic energy recovery system 17 discharges during the step 29 to power the device 11, and the step of controlling S29 lasts until the kinetic energy recovery system 17 is enough discharged. Thus, the method optimizes the time of use of the energy provided by the kinetic energy recovery system to limit the use of the engine 15 to limit the consumption of the powertrain 7.

Advantageously, the discharging capacity threshold is less than 20% of the maximal capacity of the kinetic energy recovery system 17 and preferably less than 10% of the maximal capacity.

Advantageously, during the regeneration-power cycle, the device maintains the constant rotation speed of the wheels 4, so that, as shown on figure 3, the speed of the vehicle 1 is kept constant. The rotation speed of the wheels 4 is considered constant when the rotation speed of the wheels 4 changes less than 3% in a time laps of 30 seconds. In other words, the reduction of the engine 15 in providing energy to the device 11 during the step of controlling S29, does not affect the rotation speed of the wheels 4. Thus, the regeneration-power cycle decreases the consumption of the vehicle 1 without disrupting comfort of the driver by keeping speed of the vehicle 1 constant.

Advantageously, the method comprises several successive regeneration-power cycles. Advantageously, the step 25 of one cycle occurs after the step 31 of the previous cycle.

Thus, while the speed of the vehicle 1 needs to stay constant, one regeneration-power cycles follows another and the consumption of the vehicle 1 is reduced without disrupting comfort of the driver.

**Example 1:** A method for controlling a powertrain 7 of a vehicle 1, the powertrain 7 comprising:
- a device 11 for converting energy for driving wheels 4 of the vehicle 1,
- an engine 15, configured for providing energy to the device 11,
- a kinetic energy recovery system 17, configured for switching between a suppling configuration in which the kinetic energy recovery system provides energy to the device 11 and a charging configuration in which the kinetic energy recovery system 17 is charged by the engine 15 to storage kinetic energy,

the powertrain 7 being configured to switch between a regenerative configuration in which the kinetic energy recovery system 17 is in the charging configuration and the device 11 is powered by the engine 15, and a powered configuration in which the kinetic energy recovery system 17 is in the supplying configuration,
wherein the method comprises at least one regeneration-power cycle, comprising the following successive steps:
   a) controlling the powertrain 7 in the regenerative configuration,
   b) switching the powertrain 7 from the regenerative configuration to the powered configuration; and
   c) controlling the powertrain 7 in the powered configuration.

**Example 2:** The method of example 1, further comprising wherein the device 11 maintains a constant rotation speed of the wheels 4 constant during the at least one regeneration-power cycle.

**Example 3:** The method of any one of the preceding examples, wherein the step b) is carried out if one regenerative-powered switching criteria is complied with, the regenerative-powered criteria comprising charging the kinetic energy recovery system 17 above a charging capacity threshold.

**Example 4:** The method of the example 3, wherein the charging capacity threshold is at least more than 80% of a maximal capacity of the kinetic energy recovery system 17, preferably at least more than 90% of the maximal capacity.

**Example 5:** The method of any one of the preceding examples, wherein the at least one regeneration-power cycle further comprises, after step c), a step d) of switching the powertrain 7 from the powered configuration to the regenerative configuration, the step d) is carried out if one powered-regenerative switching criteria is complied with, the powered-regenerative criteria comprising discharging the kinetic energy recovery system 17 under a discharging capacity threshold.

**Example 6:** The method of the example 5, wherein the discharging capacity threshold is less than 20% of a maximal capacity of the kinetic energy recovery system 17, preferably at least less than the 10% of the maximal capacity.

**Example 7:** The method of any one of the preceding examples, wherein, in the powered configuration of the powertrain 7, the engine 15 is switched off.

**Example 8:** The method of any one of the preceding examples, wherein, during the regenerative configuration of the powertrain 7, the engine 15 is used above a generation power threshold, the generation power threshold being a least more than 80% of a maximal generation power capacity of the engine 15, preferably at least more than the 90% of the maximal generation power capacity.

**Example 9:** The method of any one of the preceding examples, the regeneration-power cycle is implemented when a speed of the vehicle 1 is above a speed threshold and/or when the speed of the vehicle 1 is constant.

**Example 10:** The method of any one of the preceding examples, wherein the method comprises several successive regeneration-power cycles.

**Example 11:** A computer program product comprising a computer readable medium, having thereon a computer program comprising program instructions, the computer program being loadable into a processing unit and adapted to cause execution of a method of any one of the examples 1 to 10 when the computer program is run by the parameter processing unit.

**Example 12:** A computer readable medium having encoded thereon a computer program of the example 11.

**Example 13:** A controller 9 comprising a computer readable medium having encoded thereon a computer program comprising program instructions, the computer program being loadable into a processing unit and adapted to cause execution of a method of any one of the examples 1 to 10 when the computer program is run by the parameter processing unit.

**Example 14:** A powertrain 7 of a vehicle comprising:
- a device 11 for converting energy for driving wheels 4 of the vehicle 1,
- an engine 15, configured for providing energy to the device 11,
- a kinetic energy recovery system 17, configured for switching between a suppling configuration in which the kinetic energy recovery system 17 provides energy to the device and a charging configuration in which the kinetic energy recovery system 17 is charged by the engine to storage kinetic energy,

- a controller 9 configured for commanding the device 11 , the engine 15 and the kinetic energy recovery system 17,

the powertrain 7 being configured to switch between a regenerative configuration in which the kinetic energy recovery system 17 is in the charging configuration and the device 11 is powered by the engine 15, and a powered configuration in which the kinetic energy recovery system 17 is in the supplying configuration,
wherein the controller 9 being configured for controlling at least one regeneration-power cycle, the least one regeneration-power cycle comprising the following successive steps:
   a) controlling the powertrain 7 in the regenerative configuration,
   b) switching the powertrain 7 from the regenerative configuration to the powered configuration; and
   c) controlling the powertrain 7 in the powered configuration.

**Example 15:** A vehicle 1 comprising a powertrain 7 of the example 14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for controlling a powertrain (7) of a vehicle (1), the powertrain (7) comprising:
- a device (11) for converting energy for driving wheels (4) of the vehicle (1),
- an engine (15), configured for providing energy to the device (11),
- a kinetic energy recovery system (17), configured for switching between a suppling configuration in which the kinetic energy recovery system provides energy to the device (11) and a charging configuration in which the kinetic energy recovery system (17) is charged by the engine (15) to storage kinetic energy,
the powertrain (7) being configured to switch between a regenerative configuration in which the kinetic energy recovery system (17) is in the charging configuration and the device (11) is powered by the engine (15), and a powered configuration in which the kinetic energy recovery system (17) is in the supplying configuration,
wherein the method comprises at least one regeneration-power cycle, comprising the following successive steps:
a) controlling the powertrain (7) in the regenerative configuration,
b) switching the powertrain (7) from the regenerative configuration to the powered configuration; and
c) controlling the powertrain (7) in the powered configuration.

2. A method according to claim 1, wherein the device (11) maintains a constant rotation speed of the wheels (4) constant during the at least one regeneration-power cycle.

3. A method according to any one of the preceding claims, wherein the step b) is carried out if one regenerative-powered switching criteria is complied with, the regenerative-powered criteria comprising charging the kinetic energy recovery system (17) above a charging capacity threshold.

4. A method according to claim 3, wherein the charging capacity threshold is at least more than 80% of a maximal capacity of the kinetic energy recovery system (17), preferably at least more than 90% of the maximal capacity.

5. A method according to any one of the preceding claims, wherein the at least one regeneration-power cycle further comprises, after step c), a step d) of switching the powertrain (7) from the powered configuration to the regenerative configuration, the step d) is carried out if one powered-regenerative switching criteria is complied with, the powered-regenerative criteria comprising discharging the kinetic energy recovery system (17) under a discharging capacity threshold.

6. A method according to claim 5, wherein the discharging capacity threshold is less than 20% of a maximal capacity of the kinetic energy recovery system (17), preferably at least less than the 10% of the maximal capacity.

7. A method according to any one of the preceding claims, wherein, in the powered configuration of the powertrain (7), the engine (15) is switched off.

8. A method according to any one of the preceding claims, wherein, during the regenerative configuration of the powertrain (7), the engine (15) is used above a generation power threshold, the generation power threshold being a least more than 80% of a maximal generation power capacity of the engine (15), preferably at least more than the 90% of the maximal generation power capacity.

9. A method according to any one of the preceding claims, wherein the regeneration-power cycle is implemented when a speed of the vehicle (1) is above a speed threshold and/or when the speed of the vehicle (1) is constant.

10. A method according to any one of the preceding claims, wherein the method comprises several successive regeneration-power cycles.

11. A computer program product comprising a computer readable medium, having thereon a computer program comprising program instructions, the computer program being loadable into a processing unit and adapted to cause execution of a method according to any one of the claims 1 to 10 when the computer program is run by the parameter processing unit.

12. A computer readable medium having encoded thereon a computer program according to claim 11.

13. A controller (9) comprising a computer readable medium having encoded thereon a computer program comprising program instructions, the computer program being loadable into a processing unit and adapted to cause execution of a method according to any one of the claims 1 to 10 when the computer program is run by the parameter processing unit.

14. A powertrain (7) of a vehicle comprising:
- a device (11) for converting energy for driving wheels (4) of the vehicle (1),
- an engine (15), configured for providing energy to the device (11),
- a kinetic energy recovery system (17), configured for switching between a suppling configuration in which the kinetic energy recovery system (17) provides energy to the device and a charging configuration in which the kinetic energy recovery system (17) is charged by the engine to storage kinetic energy,
- a controller (9) configured for commanding the device (11) , the engine (15) and the kinetic energy recovery system (17),
the powertrain (7) being configured to switch between a regenerative configuration in which the kinetic energy recovery system (17) is in the charging configuration and the device (11) is powered by the engine (15), and a powered configuration in which the kinetic energy recovery system (17) is in the supplying configuration,
wherein the controller (9) being configured for controlling at least one regeneration-power cycle, the least one regeneration-power cycle comprising the following successive steps:
a) controlling the powertrain (7) in the regenerative configuration,
b) switching the powertrain (7) from the regenerative configuration to the powered configuration; and
c) controlling the powertrain (7) in the powered configuration.

15. A vehicle (1) comprising a powertrain (7) according to claim 14.

## Amended claims

### Amended claims in accordance with Rule 137(2) EPC.

1. A method for controlling a powertrain (7) of a vehicle (1), the powertrain (7) comprising:
- a device (11) for converting energy for driving wheels (4) of the vehicle (1),
- an engine (15), configured for providing energy to the device (11),
- a kinetic energy recovery system (17), configured for switching between a suppling configuration in which the kinetic energy recovery system provides energy to the device (11) and a charging configuration in which the kinetic energy recovery system (17) is charged by the engine (15) to storage kinetic energy,
the powertrain (7) being configured to switch between a regenerative configuration in which the kinetic energy recovery system (17) is in the charging configuration and the device (11) is powered by the engine (15), and a powered configuration in which the kinetic energy recovery system (17) is in the supplying configuration,
wherein the method comprises at least one regeneration-power cycle, comprising the following successive steps:
a) controlling the powertrain (7) in the regenerative configuration,
b) switching the powertrain (7) from the regenerative configuration to the powered configuration; and
c) controlling the powertrain (7) in the powered configuration
wherein the regeneration-power cycle is implemented when a speed of the vehicle (1) is above a speed threshold.

2. A method according to claim 1, wherein the device (11) maintains a constant rotation speed of the wheels (4) constant during the at least one regeneration-power cycle.

3. A method according to any one of the preceding claims, wherein the step b) is carried out if one regenerative-powered switching criteria is complied with, the regenerative-powered criteria comprising charging the kinetic energy recovery system (17) above a charging capacity threshold.

4. A method according to claim 3, wherein the charging capacity threshold is at least more than 80% of a maximal capacity of the kinetic energy recovery system (17), preferably at least more than 90% of the maximal capacity.

5. A method according to any one of the preceding claims, wherein the at least one regeneration-power cycle further comprises, after step c), a step d) of switching the powertrain (7) from the powered configuration to the regenerative configuration, the step d) is carried out if one powered-regenerative switching criteria is complied with, the powered-regenerative criteria comprising discharging the kinetic energy recovery system (17) under a discharging capacity threshold.

6. A method according to claim 5, wherein the discharging capacity threshold is less than 20% of a maximal capacity of the kinetic energy recovery system (17), preferably at least less than the 10% of the maximal capacity.

7. A method according to any one of the preceding claims, wherein, in the powered configuration of the powertrain (7), the engine (15) is switched off.

8. A method according to any one of the preceding claims, wherein, during the regenerative configuration of the powertrain (7), the engine (15) is used above a generation power threshold, the generation power threshold being a least more than 80% of a maximal generation power capacity of the engine (15), preferably at least more than the 90% of the maximal generation power capacity.

9. A method according to any one of the preceding claims, wherein the regeneration-power cycle is implemented when the speed of the vehicle (1) is constant.

10. A method according to any one of the preceding claims, wherein the method comprises several successive regeneration-power cycles.

11. A computer program product comprising a computer readable medium, having thereon a computer program comprising program instructions, the computer program being loadable into a processing unit and adapted to cause execution of a method according to any one of the claims 1 to 10 when the computer program is run by the parameter processing unit.

12. A computer readable medium having encoded thereon a computer program according to claim 11.

13. A controller (9) comprising a computer readable medium having encoded thereon a computer program comprising program instructions, the computer program being loadable into a processing unit and adapted to cause execution of a method according to any one of the claims 1 to 10 when the computer program is run by the parameter processing unit.

14. A powertrain (7) of a vehicle comprising:
- a device (11) for converting energy for driving wheels (4) of the vehicle (1),
- an engine (15), configured for providing energy to the device (11),
- a kinetic energy recovery system (17), configured for switching between a suppling configuration in which the kinetic energy recovery system (17) provides energy to the device and a charging configuration in which the kinetic energy recovery system (17) is charged by the engine to storage kinetic energy,
- a controller (9), according to the previous claim, configured for commanding
the device (11), the engine (15) and the kinetic energy recovery system (17), the powertrain (7) being configured to switch between a regenerative configuration in which the kinetic energy recovery system (17) is in the charging configuration and the device (11) is powered by the engine (15), and a powered configuration in which the kinetic energy recovery system (17) is in the supplying configuration,
wherein the controller (9) being configured for controlling at least one regeneration-power cycle, the least one regeneration-power cycle comprising the following successive steps:
a) controlling the powertrain (7) in the regenerative configuration,
b) switching the powertrain (7) from the regenerative configuration to the powered configuration; and
c) controlling the powertrain (7) in the powered configuration
wherein the regeneration-power cycle is implemented when a speed of the vehicle (1) is above a speed threshold.

15. A vehicle (1) comprising a powertrain (7) according to claim 14.
